(19) Europäisches Patentamt
European Patent Office
Office européen des brevets

(11) **EP 3 174 192 B1**

(12) **EUROPEAN PATENT SPECIFICATION**

(45) Date of publication and mention
of the grant of the patent:
**26.05.2021 Bulletin 2021/21**

(51) Int Cl.:
*H02P 6/10* *(2006.01)* *H02P 23/00* *(2016.01)*
*F04B 1/06* *(2020.01)* *F04B 49/06* *(2006.01)*
*B29C 45/76* *(2006.01)*

(21) Application number: **16200408.9**

(22) Date of filing: **24.11.2016**

(54) **METHOD FOR CONTROLLING AN ELECTRIC MOTOR OF A SERVO-PUMP OF AN INDUSTRIAL MACHINE TO MODIFY A HYDRAULIC PRESSURE APPLIED BY THE SERVO-PUMP TO A LOAD**

VERFAHREN ZUR STEUERUNG EINES ELEKTROMOTORS EINER SERVOPUMPE EINER INDUSTRIELLEN MASCHINE ZUR VERÄNDERUNG EINES VON DER SERVOPUMPE AUF EINE LAST ANGEWANDTEN HYDRAULISCHEN DRUCKS

PROCÉDÉ DE COMMANDE D'UN MOTEUR ÉLECTRIQUE DE SERVOPOMPE DE MACHINE INDUSTRIELLE POUR MODIFIER LA PRESSION HYDRAULIQUE APPLIQUÉE À UNE CHARGE PAR LA SERVOPOMPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2015 IT UB20155957**

(43) Date of publication of application:
**31.05.2017 Bulletin 2017/22**

(73) Proprietor: **GEFRAN DRIVES AND MOTION S.R.L.**
**21040 Gerenzano (VA) (IT)**

(72) Inventors:
• **COLOMBO, Davide**
**21040 Gerenzano**
**Varese (IT)**

• **MOLTENI, Roberto**
**21040 Gerenzano**
**Varese (IT)**
• **VISIOLI, Antonio**
**21040 Gerenzano**
**Varese (IT)**
• **SIMONI, Luca**
**21040 Gerenzano**
**Varese (IT)**

(74) Representative: **Mozzi, Matteo**
**Jacobacci & Partners S.p.A.**
**Via Senato, 8**
**20121 Milano (IT)**

(56) References cited:
WO-A1-2014/206339      CN-A- 104 895 736
US-A1- 2012 104 642      US-A1- 2013 063 068

**Description**

TECHNICAL BACKGROUND OF THE INVENTION

Field of application

The present invention generally relates to the field of electric and electronic drives for the control of industrial machines, and in particular, but not exhaustively, for the control of a hydraulic unit or servo-pump of a machine for molding plastics (injection molding machine or IMM). In particular, the invention relates to a method for controlling an electric motor of a servo-pump of such a molding machine in order to modify a hydraulic pressure applied by the servo-pump to a load.

Prior art

Hydraulic units of machines for molding plastics (injection molding machine or IMM) are manufactured today so as to comprise electric motors, for example of the brushless type, which are configured to activate pumps, for example variable rotation pumps. Such hydraulic units are called servo-pumps by those skilled in the art. Modern machines for molding plastics also comprise an electronic drive unit configured to control the movements of the motor of the servo-pump.

With respect to solutions of molding machines used in the past, as for example in documents US 2012/0104642 A1 or US 2013/0063068 A1, modern machines for molding plastics using servo-pumps provide advantages in terms of reducing the dimensions of the machine and also in terms of reducing the consumption and the noise emitted during processing.

As is known, a "critical" processing step in a machine for molding plastics is the injection step. The melted plastic material is brought, generally by means of a worm screw, toward a nozzle which distributes such a plastic material onto a mold. In this step, there is a need to ensure that the pressure values in the hydraulic circuit of the servo-pump controlling the worm screw do not deviate from a preset average value, to avoid the material to be molded from creating burrs or not filling the mold. In particular, there is a need for the electronic drive unit controlling the motor of the servo-pump to keep the pressure in the hydraulic circuit at an average value, defined by the user of the machine according to material used, thus minimizing the disturbances such as the damaging ripples of the value of such a pressure.

In order to control servo-pumps, known methods provide the use in sequence of three controls, each of which is in a closed-loop: a pressure control, a speed control and a driving torque control.

If on the one hand such known control methods allow the disturbances to be reduced, they do not allow to obtain satisfactory results in many applications, especially in the case of repetitive disturbances, as occurs in the case of plastic molding machines. Indeed, such closed-loop control methods are effective for following the pressure reference in the passing band of the control system, but they do not allow to lower the pressure ripples having components in frequencies higher than such a passing band.

SUMMARY OF THE INVENTION

It is the object of the present invention to devise and provide a method for controlling an electric motor associated with a servo-pump of an industrial machine, which execution allows to modify a hydraulic pressure applied by the servo-pump to a load of the machine, for example a hydraulic load, thus at least partly overcoming the above drawbacks in relation to known control methods.

Such an object is achieved by a method for controlling an electric motor of a servo-pump of an industrial machine according to claim 1.

Preferred embodiments of such a control method are described in the dependent claims.

BRIEF DESCRIPTION OF THE DRAWINGS

Further features and advantages of the method for controlling a servo-pump of an industrial machine according to the invention will become apparent from the following description of preferred embodiments thereof, given only by way of non-limiting, indicative example, with reference to the accompanying drawings, in which:

- **figure 1** shows, by way of example, a block diagram of a servo-pump control apparatus comprising an electronic control unit operating according to the method of the present invention, connected to a hydraulic unit or servo-pump;
- **figure 2** shows a block diagram of an embodiment of an inverter device or drive included in the electronic control unit of the servo-pump in figure 1;
- **figure 3** shows a functional block diagram of an embodiment of a process control block of the inverter in figure 2;

- **figure 4A** shows, in a diagram according to time, an example of pressure error signal detected in an actual case in relation to a servo-pump control apparatus;
- **figure 4B** shows, in a diagram according to frequency, the amplitudes of the pressure error signal of figure 4A;
- **figure 5A** shows, in a diagram according to time, an example of pressure error signal detected by simulation for the servo-pump control apparatus following the application of the control method of the invention;
- **figure 5B** shows, in a diagram according to frequency, the amplitudes of the pressure error signal of figure 5A;
- **figure 6A** shows a diagram according to time, of a pressure signal detected in relation to the servo-pump control apparatus before and after the application of the control method of the invention;
- **figure 6B** shows diagrams according to time, before and after the application of the control method of the invention, of:

    a torque signal generated by the motor of the servo-pump control apparatus, and
    a torque compensation signal generated in the electronic control unit;

- **figure 7** shows a flow diagram of an algorithm of the control method of the present invention;
- **figure 8** shows a flow diagram of a calibration algorithm used in the method in figure 7.

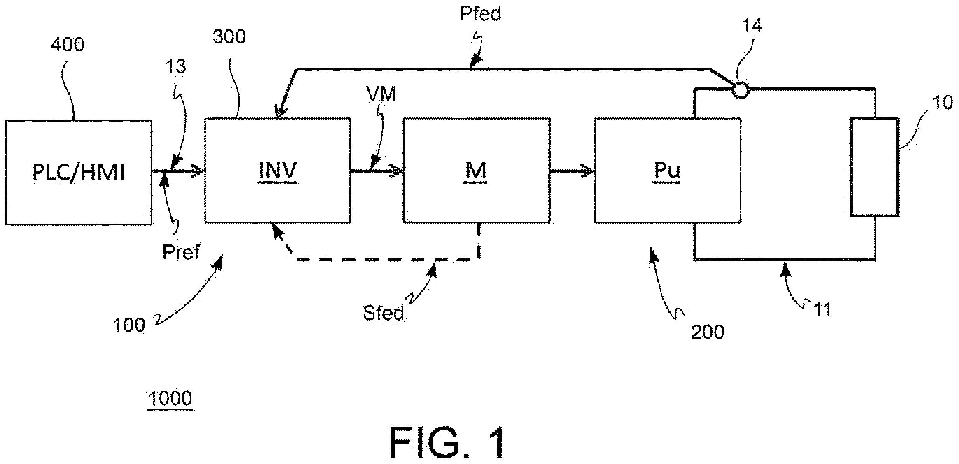

Equal or similar elements are indicated by the same numerals in the aforesaid figures 1 to 8.

DETAILED DESCRIPTION OF PREFERRED EMBODIMENTS

With reference to figure 1, a simplified block diagram of a servo-pump control apparatus which comprises a hydraulic unit or servo-pump 200 connected to an electronic control unit 100 according to the present invention, is indicated as a whole with numeral 1000.

Such a servo-pump control apparatus 1000 can be used in a machine for industrial use, particularly but not limited to a machine for plastic molding (injection molding machine or IMM) or the like.

In particular, the servo-pump 200 comprises an electric motor M, e.g. a brushless three-phase motor, having a permanent magnet rotor and stator with a rotating magnetic field, which is configured to activate a pump PU, e.g. a variable rotation pump, which is connected to a hydraulic load 10 of the machine through a hydraulic circuit 11. The servo-pump 200 is configured to activate the load, e.g. hydraulic load 10, by modifying the hydraulic pressure applied to the hydraulic circuit 11.

Such a hydraulic load 10 is for example, a worm screw of the machine for plastic molding or a piston.

The electronic control unit 100 of the servo-pump 200 comprises an inverter device or drive INV 300 configured to generate a plurality of digital signals, for example signals modulated in pulse width PWM (pulse width modulation). Such signals PWM are adapted to generate a signal of alternating voltage VM to start the movement of motor M, and are generated on the basis of control signals 13, which in turn are generated by a programmable logic controller (PLC) or by a human-machine interface (HMI) 400.

Moreover, the servo-pump control apparatus 1000 comprises a pressure sensor 14, for example operatively associated with the hydraulic circuit 11 of the servo-pump 200. Such a pressure sensor 14 is configured to generate a first signal Pfed indicative of a current pressure value detected in the hydraulic circuit 11 to be provided to the electronic control unit 100, in' particular to the inverter device 300.

The PLC controller/HMI interface 400 is configured to generate a second signal Pref indicative of a reference pressure value to be sent to the inverter device 300.

Additionally, a third signal Sfed is made available to the electronic control unit 100 by motor M. Such a third signal Sfed is indicative of a displacement $\theta$ angle of the rotor of motor M on a plane orthogonal to the rotation axis of the motor itself from a reference position, therefore it can be obtained from a rotation speed $\omega$ of motor M.

In a first embodiment, such a third signal Sfed is generated by a suitable physical sensor, e.g. a speed sensor, which is operatively associated with the electric motor M. Such a physical speed sensor materializes, for example, in a tachometric encoder or a resolver.

In an alternative embodiment, the aforesaid third signal Sfed may be generated from an estimate of the currents which cross the electric motor M according to methods known by those skilled in the art.

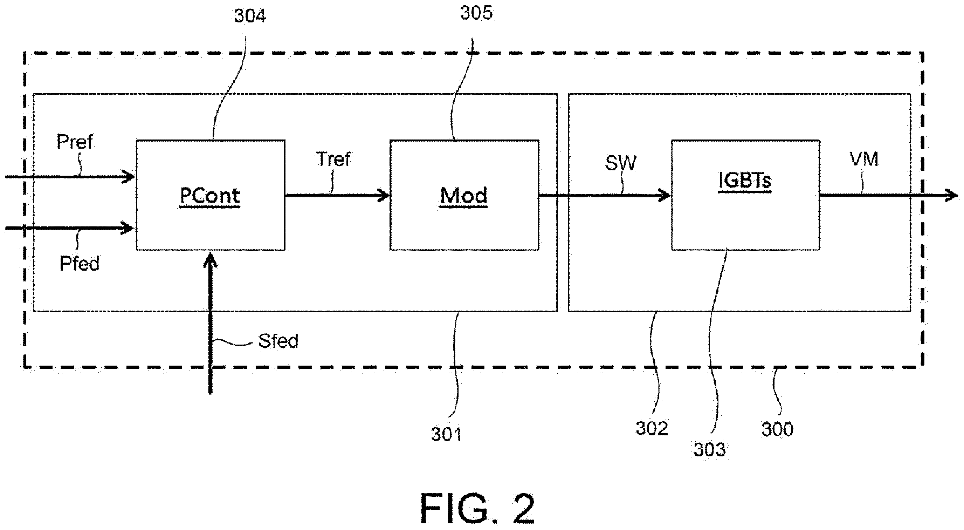

With reference to figure 2, in greater detail, the inverter device 300 comprises a control stage 301 and a power stage 302 (power drive).

Such a power stage 302 of the inverter comprises for example, a power block 303 which materializes in a circuit bridge structure (not shown), e.g. a three phase structure, including electronic power transistors, e.g. IGBT transistors (insulated gate bipolar transistor) of known type to those skilled in the art. Such a power stage 302 is configured to transfer electric power to motor M, for example by means of the alternating voltage VM, to ensure the desired speed (or driving torque) to motor M itself, that is to move it.

The control stage 301 of the inverter comprises a process control block 304 Pcont, e.g. a microprocessor or a microcontroller, which is configured to receive the above-mentioned input first signal Pfed, second signal Pref and third signal Sfed.

On the basis of such signals Pfed, Pref, Sfed, the process control block 304 is configured to generate a control signal Tref, in particular a torque signal, to control the movement of motor M of the servo-pump 200.

In particular, on the basis of such a control signal Tref, a modulator block Mod 305 included in the control stage of inverter 300 is configured to generate switching sequence digital signals SW, i.e. signals indicative of turning on/turning off sequences of the electronic power transistors IGBT of the power stage 302 of the inverter.

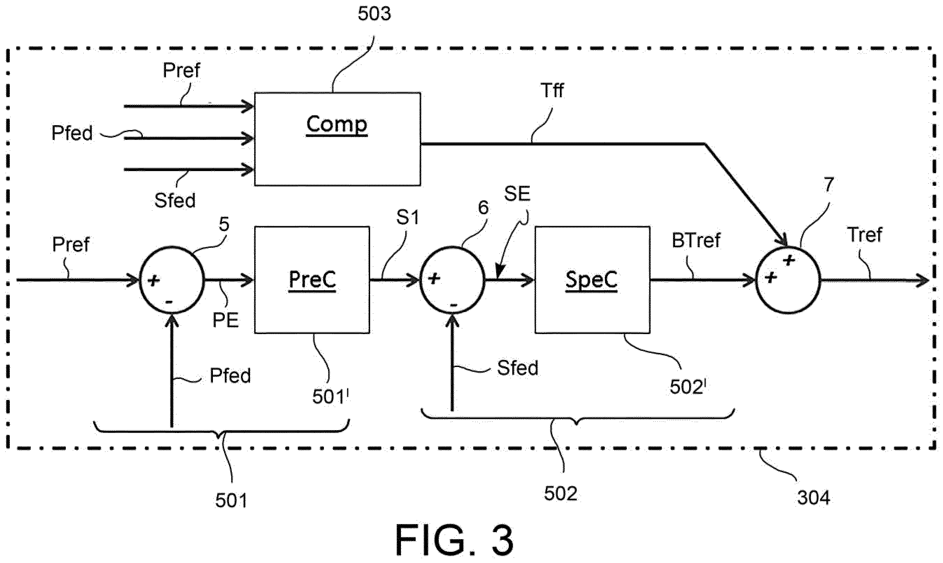

With reference to figure 3, the processing executed inside the process control block 304 of the inverter on the signals Pfed, Pref and Sfed are described in greater detail by means of a functional block diagram.

It is worth noting that the control of the pressure in a hydraulic circuit 11 of a servo-pump 200 generally provides two closed-loop controls connected to each other in sequence, in particular a first control 501 and a second control 502. Such controls 501, 502 are implemented by means of PI (proportional integral) or PID (proportional integral and derivative) regulators 501', 502' of known type to those skilled in the art. In the example described below, reference is made to control loops comprising a first regulator 501' PreC and a second regulator 502' SpeC, both of PI type.

In relation to the first control loop 501, a first subtractor node 5 is configured to receive the first Pfed and the second Pref pressure signal to generate a pressure error signal PE, i.e. a signal indicative of the deviation of pressure Pfed detected with sensor 14, from the reference pressure value.

The first regulator 501' of the first control loop 501 is configured to generate a first speed signal S1 from such a pressure error signal PE. In particular, in a depiction in the frequency domain (Laplace domain), the first speed signal S1 is obtained by amplifying the pressure error signal PE through a proportional action and an integral action based on the following equation:

$$S1 = \left( K_{p\_P} + \frac{K_{i\_P}}{s} \right) * PE \tag{1}$$

in which a first $K_{p\_P}$ and a second $K_{i\_P}$ coefficient of the first regulator 501' are conveniently calibrated coefficients. Such a first speed signal S1 depicts a reference speed signal supplied to the second control loop 502, in particular to a first input of a second subtractor node 6, in order to be compared with the third signal Sfed (for example, measured by the encoder or resolver) and sent to a second input of such a second node 6.

The second regulator 502' is configured to receive as input a speed error signal SE outputting from the second subtractor node 6.

On the basis of such a speed error signal SE, the second regulator 502' is configured to generate a fourth signal BTref indicative of a driving torque value which can be applied to motor M. Such a fourth signal BTref depicts a basic driving torque reference and is associated with the control signal Tref, i.e. a torque signal which controls the movement of motor M.

In a depiction in the Laplace domain, the fourth signal BTref is obtained by amplifying the speed error signal SE through a proportional action and an integral action based on the following equation:

$$BTref = \left( K_{p\_S} + \frac{K_{i\_S}}{s} \right) * SE \tag{2}$$

in which a third $K_{p\_S}$ and a fourth $K_{i\_S}$ coefficient of the second regulator 502' are conveniently calibrated coefficients.

In one advantageous embodiment, the process control block 304 of the inverter comprises a compensator functional block 503 configured to receive as input the above first Pfed, second Pref and third Sfed signals. On the basis of such signals, the compensator block 503 is configured to generate a signal Tff representative of a compensation driving torque to be added to the above-mentioned fourth signal BTref, to a respective adder node 7, to generate the control signal Tref to move the motor.

It is worth noting that the electronic control unit 100 of the industrial machine, in particular the inverter 300, is prepared to load and execute codes of a program for implementing the control method of the present invention.

In particular, in the example described below, inverter 300 is prepared to load, in a respective memory, and execute the program codes to allow the process control block 304 to implement such a method.

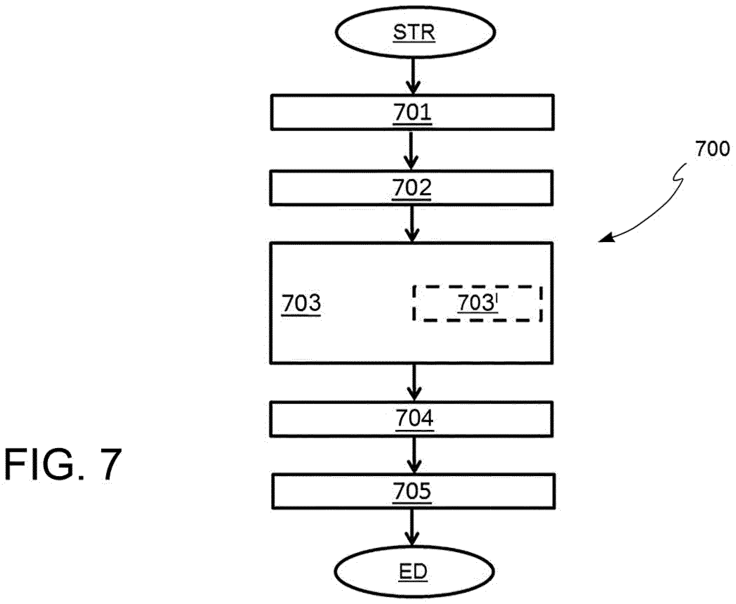

In particular, with reference to the flow diagram in figure 7, the compensator block 503 of the process block 304 implements the following steps of algorithm 700 of the control method of motor M of a servo-pump 200.

The control method, hereinafter also simply method 700, comprises a symbolic start step STR.

A first step 701 of the method provides a comparison between the first Pfed and the second signal Pref to generate a pressure error signal PE=Pref-Pfed. In particular, given that the signals Pref and Pfed are continuous over time, the value of such signals is read at regular intervals, e.g. 1 msec. Accordingly, the pressure error signal PE is also available at intervals of 1 msec.

Then, in a step 702 of the method, it is provided to transform the pressure error signal PE from the time domain to the angular position domain (position error). Such a step 702 provides multiplying the pressure error signal PE by a trigonometric function calculated in relation to the displacement angle $\theta$ obtained from the third signal Sfed to generate a first transformed signal PEt.

Such a first transformed signal PEt is configured to be projected, on the reference plane orthogonal to the rotation axis of motor M, onto two imaginary axes which are offset from each other by 90°, which rotate at the rotation speed $\omega$ of motor M.

It is worth noting that such an operation executed by the method is particularly advantageous because it disregards the structural features of pump PU, the mounting mechanics of the pump PU to motor M, the type of control, the hydraulic system and the possible delays of the encoders used. Therefore, method 700 can be applied to control various types of servo-pump.

In a successive step 703, the first transformed signal PEt is integrated over time to generate a first integrated signal PEint.

In greater detail, the components in phase $PEint_d$ and in quadrature $PEint_q$ of the pressure error signal obtained following sampling, transformation and integration PEint, can be expressed by means of the following equations:

$$\mathrm{PEint}_d = \int \left( \mathrm{PEt} * \mathrm{K}_b \right) * \cos\left( \mathrm{N} * \theta \right) \mathrm{dt} \qquad (3)$$

$$\mathrm{PEint}_q = \int \left( \mathrm{PEt} * \mathrm{K}_b \right) * \sin\left( \mathrm{N} * \theta \right) \mathrm{dt} \qquad (4)$$

in which:

the angle $\theta$ is indicative of the absolute position of motor M/pump PU;
Kb is a gain coefficient obtained with a calibration process which will be described below;
N is an integer indicative of the number of teeth/chambers of pump PU of the servo-pump 200.

In one embodiment of method 700, the trigonometric function used is calculated in a first displacement angle $N\theta$ obtained by multiplying the displacement angle $\theta$ by the integer N indicative of the number of internal teeth of pump PU of the servo-pump 200.

Then, the method provides a step 704 of transforming the first integrated signal PEint from the angular position domain to the time domain. In particular, this is obtained by multiplying the first integrated signal PEint by the same trigonometric function used in step 702, but this time calculated in relation to the sum of the above-mentioned displacement angle $\theta$ and of an offset angle or offset $\theta_{off}$ from the absolute position of motor M, to generate a second transformed signal Tff. Such a second transformed signal Tff is in particular representative of a compensation driving torque value.

In particular, the second transformation of step 704, which is executed on the components $PEint_d$ and $PEint_q$ of the pressure error signal calculated in the equations (3) and (4), allows to obtain first components E1, E2 of the second transformed signal Tff, which can be expressed with:

$$\mathrm{E1} = \mathrm{PEint}_d * \cos\left( \mathrm{N} * \theta + \theta_{off} \right) \qquad (5)$$

$$\mathrm{E2} = \mathrm{PEint}_q * \sin\left( \mathrm{N} * \theta + \theta_{off} \right) \qquad (6)$$

The second transformed signal Tff therefore can be expressed with the equation:

$$\mathrm{Tff} = \mathrm{E1} + \mathrm{E2} = \mathrm{PEint}_d * \cos\left( \mathrm{N} * \theta + \theta_{off} \right) + \mathrm{PEint}_q * \sin\left( \mathrm{N} * \theta + \theta_{off} \right) \qquad (7)$$

Then, method 700 provides a step 705 of adding the second transformed signal Tff to the fourth signal BTref to generate the aforesaid control signal Tref adapted to move motor M.

Method 700 concludes with a symbolic end step ED.

In other words, method 700 of the invention allows a disturbance on the pressure in the hydraulic circuit 11 of the servo-pump 200 to be controlled by acting on the torque applied to motor M.

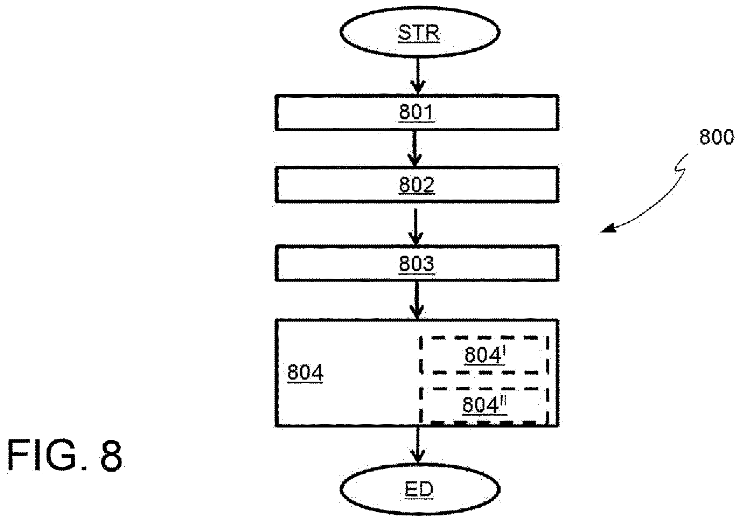

With reference to the flow diagram in figure 8, the process control block 304 of inverter 300 also implements the following steps of a calibration process 800 associated with the above-described control method 700.

In particular, the steps of the calibration process 800 can be executed before the execution of algorithm 700 of the invention or also during the operation of the industrial machine to identify and correct variations dues to thermal or time-varying effects typical of a controlled system.

The calibration process of algorithm 700, hereinafter also simply process 800, comprises a symbolic start step STR.

Such a calibration process provides an application step 801, through the electronic control unit 100, of a test signal or first control signal Tref1 of a driving torque adapted to move the electric motor M. Such a first torque control signal Tref1 is a periodic signal.

In one embodiment, such a first periodic torque control signal Tref 1 is sinusoidal.

Moreover, such a first periodic torque control signal Tref1 has a frequency F which is correlated with the number of internal teeth N of pump PU of the servo-pump 200.

In greater detail, frequency F of the first torque control signal Tref1 is equal to the product of a reference frequency F1 by the integer N indicative of the number of internal teeth of pump PU of the servo-pump 200. The aforesaid reference frequency F1 is indicative of the angular speed $\omega$ of rotation of motor M.

For example, in the case of a pump having 13 internal teeth, a control signal Tref1 is applied comprising several sinusoids, each at a frequency multiple of 13 times the rotation speed of the pump.

The calibration process 800 further provides a step 802 of detecting a further first signal Pfed1 indicative of a current pressure value in the hydraulic circuit 11 of the servo-pump 200 following the application of the first torque control signal Tref1.

Then, process 800 comprises a step 803 of providing the electronic control unit 100 with the further first signal Pfed1 detected.

The calibration process 800 further comprises a step 804 of processing the further first signal detected Pfed1 to obtain amplitude difference AM and phase difference PH information between such a further first signal Pfed1 detected and the first torque control signal Tref1 applied to the motor.

In one embodiment, the aforesaid step 804 of processing signal Pfed 1 further comprises a step 804' of generating the gain coefficient Kb, which is used in the above-described integration step 703, by calculating the ratio between the amplitude of the first torque control signal Tref1 applied and the amplitude of the further first signal Pfed1 detected.

In light of this, in relation to method 700, the above-described integration step 703 of the first transformed signal PEt comprises a further step 703' of multiplying such a transformed signal PEt by the gain coefficient Kb thus calculated.

In another embodiment, such a processing step 804 of the further first signal Pfed1 detected further comprises a step 804" of generating the above-mentioned offset angle $\theta_{off}$, which is used in the above-mentioned transformation step 704 in relation to method 700, by calculating the phase difference between the further first signal Pfed1 detected and the first torque control signal Tref1 applied to the motor.

The calibration process 800 concludes with a symbolic end step ED.

The control method 700 and the related calibration process 800 of the present invention have several advantages.

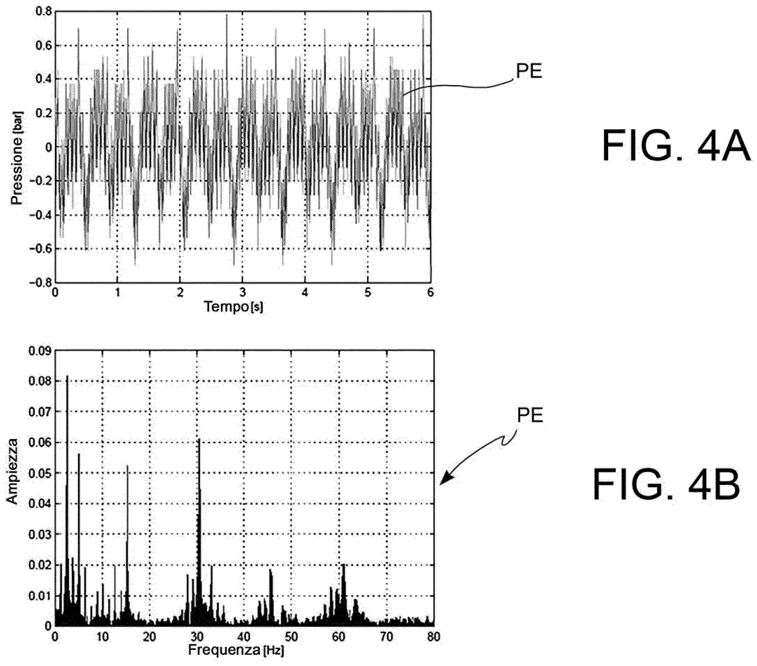

In particular, figure 4A shows, in a diagram according to time, an example of pressure error signal PE detected in an actual case during an operating test of the servo-pump control apparatus 1000. Figure 4B shows in a diagram, the amplitudes of the pressure error signal PE of figure 4A according to frequency.

It is apparent from such figures 4B-B that with the compensator block 503 inactive, there are variations of the pressure error PE, even if the system is controlled and calibrated suitably to the maximum possibilities provided by inverter 300. The main components of such pressure errors have frequency which is the function of the rotation speed $\omega$ of motor M and of the number of chambers or teeth N of pump PU used.

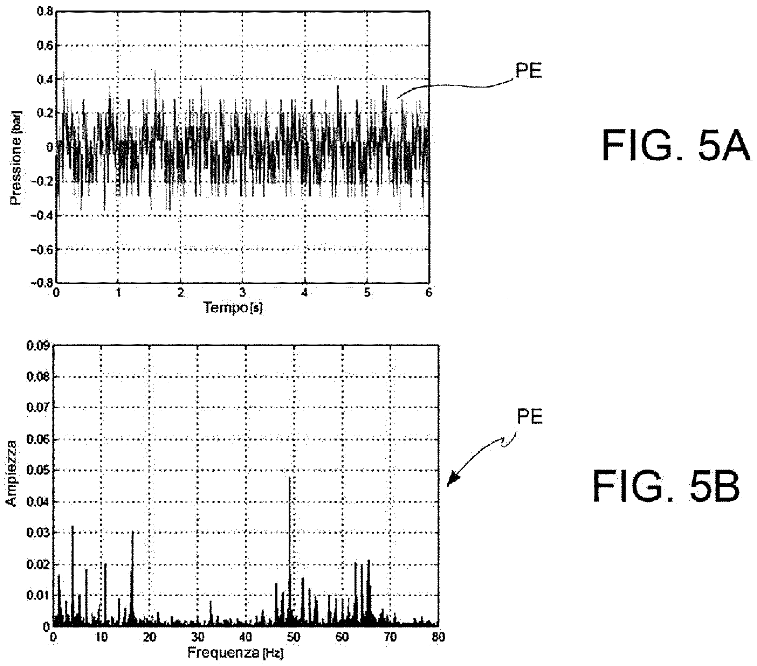

Figure 5A shows, in a diagram according to time, an example of pressure error signal obtained from simulation related to the servo-pump control apparatus 1000 following the application of the control method of the present invention; i.e. following the activation of compensator 503. The diagram in figure 5B shows, according to frequency, the amplitudes of the pressure error signal of figure 5A.

The advantages are clearly apparent from the comparison of the aforesaid figures 4A, 5A and 4B, 5B, in terms of reduction of the ripples of the pressure error signal PE obtained with the application of the method of the invention. In the specific case of figure 4A, the ripple due to the number of chambers N of pump PU is apparent with the larger amplitude harmonics at the frequencies of 15 Hz and 30 Hz, which are substantially modified or compensated for after the application of the method of the invention, as noted in figure 5B.

In other words, the control of the invention is configured to act on a given frequency or series of given frequencies of the pressure disturbance signal.

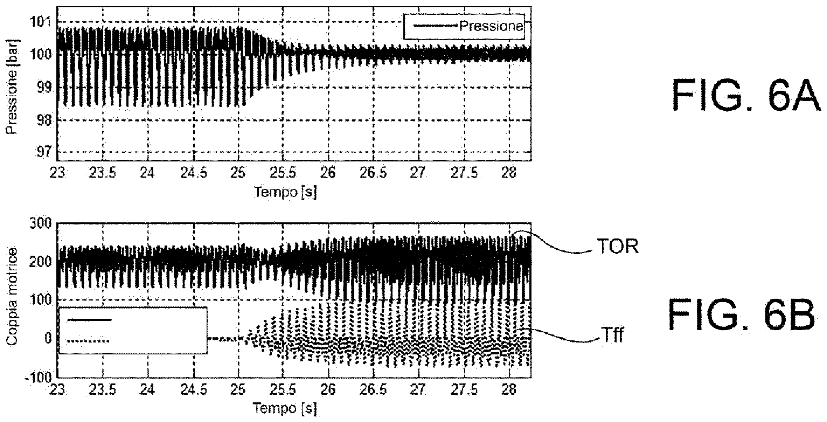

Similarly, with reference to the diagram according to time in figure 6A obtained with a simulation, a significant reduction is noted of the ripples of the pressure signal detected in relation to the servo-pump control apparatus 1000 following the application of the control method of the invention at instant T=25 sec. In particular, the Applicant has verified that the control method proposed reduces the pressure ripples from about 1 bar of variation to 0.2 bar.

Figure 6B shows a diagram according to time, of a driving torque signal TOR generated by motor M of the servo-pump control apparatus 1000 on the basis of the above-described control signal Tref=BTref+Tff. In particular, it is worth noting the variation of such a torque signal TOR following the application of the control method of the invention at instant T=25 sec and the subsequent increase of the amplitude of the overall signal. Moreover, figure 6B itself shows a torque signal corresponding to the generation by part of the compensation block 503, of the compensation signal Tff before and after the application of the method of the invention.

The reduction in amplitude of the ripples of the pressure applied by the servo-pump 200 to load 10 which is obtained with the control method of the invention, has the advantage of reducing the burrs in the processing executed with machines for plastic molding, while at the same time promoting the consolidation of the molded material.

By analogy, the application of the method of the invention would allow the vibrations of the moving parts of the machine to be reduced when controlling lifting machines.

Those skilled in the art may make several changes and adaptations to the embodiments of the control method, and may replace elements with others in order to meet contingent needs, without departing from the scope of the following claims. All the features described above as belonging to a possible embodiment may be implemented irrespective of the other embodiments described.

## Claims

1. Method for controlling an electric motor (M) associated with a servo-pump (200) of an industrial machine to modify a hydraulic pressure applied by the servo-pump (200) to a load (10), wherein said electric motor (M) can be moved based on actuation electric signals generated by an electronic control unit (100), the method comprising the steps of:

   - providing, the electronic control unit (100), with a first signal (Pfed) indicative of a current pressure value detected in a hydraulic circuit (11) of the servo-pump (200) ;
   - providing, the electronic control unit (100), with a second signal (Pref) indicative of a reference pressure value;
   - providing, the electronic control unit (100), with a third signal (Sfed) indicative of a displacement angle ($\theta$) of a rotor of the electric motor (M) detected on a plane orthogonal to the rotation axis starting from a reference position;
   - generating, based on said first (Pfed), second (Pref) and third (Sfed) signal, a fourth signal (BTref) indicative of a driving torque value that can be applied to the motor (M) and associated to a torque control signal (Tref) configured to control the movement of the motor (M) of the servo-pump (200),
   the method further comprising the following steps carried out by the electronic control unit:
   - comparing the first (Pfed) and the second (Pref) signal to generate a pressure error signal (PE);
   - multiplying said pressure error signal (PE) by a trigonometric function calculated in relation to said displacement angle ($\theta$) obtained from the third signal (Sfed) to generate a first transformed signal (PEt);
   - integrating over time said first transformed signal (PEt) to generate a first integrated signal (PEint);
   - multiplying said first integrated signal (PEint) by said trigonometric function calculated in relation to the sum of said displacement angle ($\theta$) and an offset angle ($\theta_{off}$) to generate a second transformed signal (Tff), said second transformed signal (Tff) being representative of a compensation driving torque value;
   - adding said second transformed signal (Tff) to the fourth signal (BTref) to generate said control signal (Tref), **characterized in that** said trigonometric function is calculated in a first displacement angle (N$\theta$) obtained by multiplying said displacement angle ($\theta$) by an integer (N) indicative of the number of internal teeth of the pump (PU) of the servo-pump (200).

2. Method for controlling an electric motor (M) of a servo-pump (200) according to claim 1, further comprising the steps of:

   - applying, through the electronic control unit (100), a first control signal (Tref1) of a driving torque to move said electric motor (M), said first torque control signal (Tref1) being a periodic signal;
   - detecting a further first signal (Pfed1) indicative of a current pressure value in said hydraulic circuit (11) of the servo-pump following the application of the first torque control signal (Tref1) ;
   - providing the electronic control unit (100) with said further first signal (Pfed1);

- processing said further first signal (Pfed1) to obtain amplitude difference (AM) and phase difference (PH) information between said further first signal (Pfed1) detected and the first torque control signal (Tref1) applied.

3. Method for controlling an electric motor (M) of a servo-pump (200) according to claim 2, wherein said periodic first torque control signal (Tref1) is a sinusoidal signal.

4. Method for controlling an electric motor (M) of a servo-pump (200) according to claim 2 or 3, wherein said periodic first torque control signal (Tref1) has a frequency (F) correlated with the number of internal teeth of the pump (PU) of the servo-pump (200).

5. Method for controlling an electric motor (M) of a servo-pump (200) according to claim 4, wherein the frequency (F) of the first torque control signal (Tref1) is equal to the product of a reference frequency (F1) by an integer (N) indicative of the number of internal teeth of the pump (PU) of the servo pump (200), said reference frequency (F1) being indicative of the angular speed of rotation of the motor (M).

6. Method for controlling an electric motor (M) of a servo-pump (200) according to claim 2, wherein said step of processing said further first signal (Pfed1) further comprises a step of generating a gain coefficient (Kb) by calculating the ratio between the amplitude of the first torque control signal (Tref1) applied and the amplitude of the further first signal (Pfed1) detected.

7. Method for controlling an electric motor (M) of a servo-pump (200) according to the previous claim, wherein said step of integrating over time the first transformed signal (PEt) comprises a step of multiplying the transformed signal (PEt) by said gain coefficient (Kb).

8. Method for controlling an electric motor (M) of a servo-pump (200) according to claim 2, wherein said step of processing said further first signal (Pfed1) further comprises a step of generating said offset angle ($\theta_{off}$) by calculating the phase difference between the further first signal (Pfed1) detected and said first torque control signal (Tref1) applied.

9. Computer program loadable in a memory of an electronic control unit (100) of an electric motor (M) associated with a servo-pump (200) of an industrial machine, said program being executable by a processing control block (304) to carry out the steps of the method according to at least one of the claims 1-8.


**Patentansprüche**

1. Verfahren zum Steuern eines Elektromotors (M), welcher einer Servopumpe (200) einer industriellen Maschine zugeordnet ist, um einen Hydraulikdruck zu modifizieren, welcher durch die Servopumpe (200) an eine Last (10) angelegt wird, wobei der Elektromotor (M) auf Grundlage von elektrischen Betätigungssignalen bewegt werden kann, welche von einer elektronischen Steuereinheit (100) erzeugt werden, wobei das Verfahren die Schritte umfasst:

- Bereitstellen eines ersten Signals (Pfed) an die elektronische Steuereinheit (100), welches einen momentanen Druckwert anzeigt, welcher in einem Hydraulikkreis (11) der Servopumpe (200) detektiert wird;
- Bereitstellen eines zweiten Signals (Pref) an die elektronische Steuereinheit (100), welches einen Referenz-Druckwert anzeigt;
- Bereitstellen eines dritten Signals (Sfed) an die elektronische Steuereinheit (100), welches einen Verlagerungswinkel ($\theta$) eines Rotors des Elektromotors (M) anzeigt, welcher an einer Ebene detektiert wird, welche senkrecht zu der Rotationsachse ist, beginnend von einer Referenzposition;
- Erzeugen eines vierten Signals (BTref) auf Grundlage des ersten (Pfed), zweiten (Pref) und dritten (Sfed) Signals, welches ein Antriebsdrehmoment anzeigt, welches an den Motor (M) angelegt werden kann, und welches einem Drehmoment-Steuersignal (Tref) zugeordnet ist, welches dazu eingerichtet ist, die Bewegung des Motors (M) der Servopumpe (200) zu steuern,
wobei das Verfahren ferner die folgenden Schritte umfasst, welche von der elektronischen Steuereinheit ausgeführt werden:
- Vergleichen des ersten (Pfed) und des zweiten (Pref) Signals, um ein Druck-Fehlersignal (PE) zu erzeugen;
- Multiplizieren des Druck-Fehlersignals (PE) mit einer trigonometrischen Funktion, welche in Bezug auf den Verlagerungswinkel ($\theta$) berechnet wird, welcher aus dem dritten Signal (Sfed) erhalten wird, um ein erstes transformiertes Signal (PEt) zu erzeugen;

- Integrieren des ersten transformierten Signals (PEt) über der Zeit, um ein erstes integriertes Signal (PEint) zu erzeugen;
- Multiplizieren des ersten integrierten Signals (PEint) mit der trigonometrischen Funktion, welche in Bezug auf die Summe des Verlagerungswinkels ($\theta$) und eines Versatzwinkels ($\theta_{off}$) berechnet wird, um ein zweites transformiertes Signal (Tff) zu erzeugen, wobei das zweite transformierte Signal (Tff) einen Kompensations-Antriebsdrehmomentwert repräsentiert;
- Addieren des zweiten transformierten Signals (Tff) zu dem vierten Signal (BTref), um das Steuersignal (Tref) zu erzeugen,
**dadurch gekennzeichnet, dass**
die trigonometrische Funktion in einem ersten Verlagerungswinkel (N$\theta$) berechnet wird, welcher durch Multiplizieren des Verlagerungswinkels ($\theta$) mit einer Ganzzahl (N) erhalten wird, welche die Anzahl von internen Zähnen der Pumpe (PU) der Servopumpe (200) anzeigt.

2. Verfahren zum Steuern eines Elektromotors (M) einer Servopumpe (200) nach Anspruch 1, ferner umfassend die Schritte:

   - Anwenden eines ersten Steuersignals (Tref1) eines Antriebsdrehmoments durch die elektronische Steuereinheit (100), um den Elektromotor (M) zu bewegen, wobei das erste Drehmoment-Steuersignal (Tref1) ein periodisches Signal ist;
   - Detektieren eines weiteren ersten Signals (Pfed1), welches einen momentanen Druckwert in dem Hydraulikkreis (11) der Servopumpe anzeigt, dem Anwenden des ersten Drehmoment-Steuersignals (Tref1) folgend;
   - Bereitstellen des weiteren ersten Signals (Pfed1) an die elektronischen Steuereinheit (100);
   - Prozessieren des weiteren ersten Signals (Pfed1), um Amplitudendifferenz-(AM) und Phasendifferenz (PH)-Informationen zwischen dem detektierten weiteren ersten Signal (Pfed1) und dem angewendeten ersten Drehmoment-Steuersignal (Tref1) zu erhalten.

3. Verfahren zum Steuern eines Elektromotors (M) einer Servopumpe (200) nach Anspruch 2, wobei das periodische erste Drehmoment-Steuersignal (Tref1) ein sinusförmiges Signal ist.

4. Verfahren zum Steuern eines Elektromotors (M) einer Servopumpe (200) nach Anspruch 2 oder 3, wobei das periodische erste Drehmoment-Steuersignal (Tref1) eine Frequenz (F) aufweist, welche mit der Anzahl von internen Zähnen der Pumpe (PU) der Servopumpe (200) korreliert ist.

5. Verfahren zum Steuern eines Elektromotors (M) einer Servopumpe (200) nach Anspruch 4, wobei die Frequenz (F) des ersten Drehmoment-Steuersignals (Tref1) gleich dem Produkt einer Referenzfrequenz (F1) mit einer Ganzzahl (N) ist, welche die Anzahl von internen Zähnen der Pumpe (PU) der Servopumpe (200) anzeigt, wobei die Referenzfrequenz (F1) die Winkel-Rotationsgeschwindigkeit des Motors (M) anzeigt.

6. Verfahren zum Steuerin eines Elektromotors (M) einer Servopumpe (200) nach Anspruch 2, wobei der Schritt des Prozessierens des weiteren ersten Signals (Pfed1) ferner einen Schritt eines Erzeugens eines Verstärkungskoeffizienten (Kb) durch Berechnen des Verhältnisses zwischen der Amplitude des angewendeten ersten Drehmoment-Steuersignals (Tref1) und der Amplitude des detektierten weiteren ersten Signals (Pfed1) umfasst.

7. Verfahren zum Steuern eines Elektromotors (M) einer Servopumpe (200) nach dem vorhergehenden Anspruch, wobei der Schritt des Integrierens über der Zeit des ersten transformierten Signals (PEt) einen Schritt eines Multiplizierens des transformierten Signals (PEt) mit dem Verstärkungskoeffizienten (Kb) umfasst.

8. Verfahren zum Steuern eines Elektromotors (M) einer Servopumpe (200) nach Anspruch 2, wobei der Schritt des Prozessierens des weiteren ersten Signals (Pfed1) ferner einen Schritt eines Erzeugens des Versatzwinkels ($\theta_{off}$) durch Berechnen der Phasendifferenz zwischen dem detektierten weiteren ersten Signal (Pfed1) und dem angewendeten ersten Drehmoment-Steuersignal (Tref1) umfasst.

9. Computerprogramm, welches in einen Speicher einer elektronischen Steuereinheit (100) eines Elektromotors (M) ladbar ist, welcher einer Servopumpe (200) einer industriellen Maschine zugeordnet ist, wobei das Programm durch einen Prozessierung-Steuerblock (304) ausführbar ist, um die Schritte des Verfahrens nach wenigstens einem der Ansprüche 1-8 auszuführen.

**Revendications**

1. Procédé de commande d'un moteur électrique (M) associé à une servo-pompe (200) d'une machine industrielle, pour modifier la pression hydraulique appliquée par la servo-pompe (200) à une charge (10), le moteur électrique (M) pouvant être mû sur la base de signaux d'actionnement engendrés par une unité de commande électronique (100), le procédé comprenant les étapes de :

   - fournir à l'unité de commande électronique (100) un premier signal (Pfed) indicatif d'une valeur de pression actuelle détectée dans un circuit hydraulique (11) de la servo-pompe (200),
   - fournir à l'unité de commande électronique (100) un deuxième signal (Pref) indicatif d'une valeur de pression de référence,
   - fournir à l'unité de commande électronique (100) un troisième signal (Sfed) indicatif d'un angle de déplacement ($\theta$) d'un rotor du moteur électrique (M) détecté sur un plan perpendiculaire à l'axe de rotation, commençant à une position de référence,
   - engendrer, sur la base du premier (Pfed), du deuxième (Pref) et du troisième (Sfed) signal, un quatrième signal (BTref) indicatif d'une valeur de couple d'entrainement qui peut être appliquée au moteur (M) et associé à un signal de commande de couple (Tref) configuré pour commander le mouvement du moteur (M) de la servo-pompe (200),

   le procédé comprenant en outre les étapes suivantes effectuées par l'unité de commande électronique :

   - comparer le premier (Pfed) et le deuxième (Pref) signal pour engendrer un signal d'erreur de pression (PE),
   - multiplier le signal d'erreur de pression (PE) par une fonction trigonométrique calculée par rapport à l'angle de déplacement ($\theta$) obtenu du troisième signal (Sfed), pour engendrer un premier signal transformé (PEt),
   - intégrer le premier signal transformé (PEt) sur le temps, pour engendrer un premier signal intégré (PEint),
   - multiplier le premier signal intégré (PEint) par la fonction trigonométrique calculée par rapport à la somme de l'angle de déplacement ($\theta$) et d'un angle offset ($\theta_{off}$), pour engendrer un deuxième signal transformé (Tff), le deuxième signal transformé (Tff) représentant une valeur de compensation de couple d'entrainement,
   - ajouter le deuxième signal transformé (Tff) au quatrième signal (BTref), pour engendrer le signal de commande (Tref),

   **caractérisé en ce que** la fonction trigonométrique est calculée pour un premier angle de déplacement (N$\theta$) obtenu en multipliant l'angle de déplacement ($\theta$) par un nombre entier (N) indicatif du nombre de dents intérieures de la pompe (PU) de la servo-pompe (200).

2. Procédé de commande d'un moteur électrique (M) d'une servo-pompe (200) selon la revendication 1, comprenant en outre les étapes de :

   - appliquer, via l'unité de commande électronique (100), un premier signal de commande (Tref1) d'un couple d'entrainement pour mouvoir le moteur électrique (M), le premier signal de commande de couple (Tref1) étant un signal périodique,
   - détecter un autre premier signal (Pfed1) indicatif d'une valeur de pression actuelle dans le circuit hydraulique (11) de la servo-pompe à la suite de l'application du premier signal de commande de couple (Tref1),
   - fournir à l'unité de commande électronique (100) ledit autre premier signal (Pfed1),
   - traiter ledit autre premier signal (Pfed1) pour obtenir des informations de différence d'amplitude (AM) et de différence de phase (PH) entre ledit autre premier signal (Pfed1) détecté et le premier signal de commande de couple (Tref1) appliqué.

3. Procédé de commande d'un moteur électrique (M) d'une servo-pompe (200) selon la revendication 2, **caractérisé en ce que** le premier signal de commande de couple (Tref1) périodique est un signal sinusoïdal.

4. Procédé de commande d'un moteur électrique (M) d'une servo-pompe (200) selon la revendication 2 ou 3, **caractérisé en ce que** le premier signal de commande de couple (Tref1) périodique a une fréquence (F) corrélée au nombre de dents intérieures de la pompe (PU) de la servo-pompe (200).

5. Procédé de commande d'un moteur électrique (M) d'une servo-pompe (200) selon la revendication 4, **caractérisé en ce que** la fréquence du premier signal de commande de couple (Tref1) périodique est égale à la multiplication d'une fréquence de référence (F1) avec un nombre entier (N) indicatif du nombre de dents intérieures de la pompe (PU) de la servo-pompe (200), la fréquence de référence (F1) étant indicative de la vitesse angulaire de rotation du moteur (M).

**6.** Procédé de commande d'un moteur électrique (M) d'une servo-pompe (200) selon la revendication 2, **caractérisé en ce que** l'étape de traiter ledit autre premier signal (Pfed1) comprend en outre une étape de génération d'un coefficient de gain (Kb) en calculant le rapport entre l'amplitude du premier signal de commande de couple (Tref1) appliqué et l'amplitude dudit autre premier signal (Pfed1) détecté.

**7.** Procédé de commande d'un moteur électrique (M) d'une servo-pompe (200) selon la revendication précédente, **caractérisé en ce que** l'étape d'intégration sur le temps du premier signal transformé (Pet) comprend une étape de multiplication du signal transformé (Pet) avec le coefficient de gain (Kb).

**8.** Procédé de commande d'un moteur électrique (M) d'une servo-pompe (200) selon la revendication 2, **caractérisé en ce que** l'étape de traiter ledit autre premier signal (Pfed1) comprend en outre une étape de génération de l'angle offset ($\theta_{off}$) en calculant la différence de phase entre ledit autre premier signal (Pfed1) détecté et le premier signal de commande de couple (Tref1) appliqué.

**9.** Programme d'ordinateur pouvant être chargé dans une mémoire d'une unité de commande électronique (100) d'un moteur électrique (M) associé à une servo-pompe (200) d'une machine industrielle, le programme pouvant être mis en œuvre par un bloc de commande de traitement (304) pour mettre en œuvre les étapes du procédé selon au moins une des revendications 1 à 8.

FIG. 1

FIG. 2

EP 3 174 192 B1

FIG. 3

EP 3 174 192 B1

# FIG. 4A

# FIG. 4B

FIG. 5A

FIG. 5B

EP 3 174 192 B1

FIG. 6A

FIG. 6B

EP 3 174 192 B1

```
                          ┌──────────┐
                          │   STR    │
                          └──────────┘
                               │
                               ▼
                     ┌───────────────────┐
                     │        701        │
                     └───────────────────┘
                               │
                               ▼
                     ┌───────────────────┐              700
                     │        702        │              ◄──
                     └───────────────────┘
                               │
                               ▼
         ┌───────────────────────────────────────────┐
         │                                            │
         │                    ┌─ ─ ─ ─ ─ ─ ─ ─ ─┐     │
         │   703              │      703ᴵ        │     │
         │                    └─ ─ ─ ─ ─ ─ ─ ─ ─┘     │
         │                                            │
         └───────────────────────────────────────────┘
                               │
                               ▼
                     ┌───────────────────┐
                     │        704        │
                     └───────────────────┘
                               │
                               ▼
                     ┌───────────────────┐
                     │        705        │
                     └───────────────────┘
                               │
                               ▼
                          ┌──────────┐
                          │    ED    │
                          └──────────┘
```

FIG. 7

18

FIG. 8

**EP 3 174 192 B1**

**Patent documents cited in the description**

- US 20120104642 A1
- US 20130063068 A1